# EUROPEAN PATENT SPECIFICATION

(11) **EP 3 331 378 B1**
(45) Date of publication and mention of the grant of the patent: **21.07.2021**
(21) Application number: 16833409.2
(22) Date of filing: 03.08.2016
(51) Int. Cl.: A23L 5/20, A23L 25/00, A23K 10/30, A23K 10/37, C11B 1/04, A23L 11/30, C11B 1/10

(54) **SEPARATING THE INNER SKIN FROM JATROPHA CURCAS KERNELS**
TRENNUNG DER INNEREN HAUT VON JATROPHA CURCAS KÖRNER
SÉPARATION DE L'ENVELOPPE INTERNE D'AMANDE DE GRAINE DE JATROPHA CURCAS

(30) Priority: 03.08.2015 SG 10201506067V
(43) Date of publication of application: 13.06.2018
(73) Proprietor: Temasek Life Sciences Laboratory Limited, Singapore 117604 (SG); JOil (S) Pte. Ltd., Singapore 117604 (SG)
(72) Inventor: CHIA, Peter Leong Bin, Singapore 599970 (SG); RAMACHANDRAN, Srinivasan, Singapore 117505 (SG); HONG, Yan, Singapore 127146 (SG)
(74) Representative: Chapman, Paul Gilmour
(86) International application number: PCT/SG2016/050374
(87) International publication number: WO 2017/023207

(56) References cited:
- EP-A1- 2 484 228
- WO-A1-2013/137822
- JP-B2- 3 886 196
- US-A- 2 530 272
- US-A- 3 264 113
- US-A- 5 094 868
- US-A1- 2007 292 572
- US-A1- 2007 292 572
- US-A1- 2011 281 017
- US-A1- 2011 311 710
- US-B1- 8 137 717
- WEI HE ET AL: "Analysis of seed phorbol-ester and curcin content together with genetic diversity in multiple provenances of Jatropha curcas L. from Madagascar and Mexico", PLANT PHYSIOLOGY AND BIOCHEMISTRY, GAUTHIER-VILLARS, PARIS, FR, vol. 49, no. 10, 11 July 2011 (2011-07-11) , pages 1183-1190, XP028299927, ISSN: 0981-9428, DOI: 10.1016/J.PLAPHY.2011.07.006 [retrieved on 2011-07-23]
- DEVAPPA RK ET AL.: 'Localisation of antinutrients and qualitative identification of toxic components in Jatropha curcas seed' J SCI FOOD AGRIC vol. 92, 16 December 2012, pages 1519 - 1525, XP055362922

## Description

### FIELD OF THE INVENTION

The present invention relates to processes for reducing the amount of phorbol esters in the oil and cake produced from *Jatropha curcas* seed kernels. The disclosure also relates to uses of the products of the process for oil, animal feed and anti-microbial, anti-mollusc, anti-tumor or bio-pesticide agents.

### BACKGROUND

The present invention is to be understood in light of what has previously been done in the field. However, the following discussion is not an acknowledgement or an admission that any of the material referred to was published, used or part of the common knowledge of the skilled person as at the priority date of the application.

*Jatropha (Jatropha curcas* L.) is a tropical shrub yielding high quality non-edible oil suitable as feedstock for biodiesel and bio jet fuel. In addition to the oil, an almost equal amount of high protein-containing seed cake (>50% crude protein) can be produced from its kernels which has potential as animal feed. However, phorbol esters (PEs) and some anti-nutrients in seeds make it unsuitable for animal nutrition despite a good amino acid profile. Phorbol Esters also raise safety and environmental concerns on the *Jatropha* plantation and in the processing of seed and other products.. Phorbol esters are present at high level in seed kernel, but much higher concentrations (6-10 times concentration as in total kernel, as high as 14,449 ppm or 1.4% dry weight) are found in the maternally derived inner skin of the seed, referred to as the tegmen, which envelopes the endosperm (He, W., A.J. King, et al.,. Plant Physiol. Biochem. 49 (10): 1183-1190 (2011)). He *et al* describes the genetic diversity of Jatropha curcas and correlates it with the phorbol ester and curcin content and toxicity or edibility of the seeds with a view to breeding varieties with low toxicity. There is almost no phorbol ester in the seed coat (testa), which is removed from the seed through a decortication process to yield a kernel. WO 2013/137822 describes the removal of the hard-to-penetrate testa for facilitating UV radiation onto the kernel so as to degrade phorbol ester content therein. Processing of kernels yields phorbol ester-containing oil and cake. The cake produced also has fibers from the inner skin. Removing the high phorbol ester- and fiber-containing inner skin from kernels before processing endosperm would be expected to decrease the amount of phorbol ester in both the oil and cake. In addition, removing the inner skin should also decrease the fiber and increase the protein content of the cake. However, it is difficult to peel the inner skin (tegmen) from the kernels of *Jatropha* because it is tightly bound. Manual or mechanical force peeling is not feasible, especially in the context of handling and processing on an industrial scale tens of tonnes of seeds per day. In addition, attempts at soaking the seeds in water overnight and then trying to peel off the inner skin have proven to be inefficient because less than 5% of the kernel skins were removed (data not shown).

In view of the above problems with the presence of phorbol esters in *Jatropha* seeds, it is desirable to provide *Jatropha* seed oil and cake with reduced phorbol ester content and an improved process therefor.

### SUMMARY OF THE INVENTION

Described herein is a method of using chemicals to remove the inner skin of *Jatropha* seeds. The phorbol ester-containing tegmen can be used to produce bio-pesticides and in various medical applications. The method allows peeling of the inner skins of *Jatropha* seeds, by chemically treating the *Jatropha* kernels. Suitable chemicals may be selected from the group comprising hydrogen peroxide, sodium bicarbonate and dilute alkaline solutions, including sodium hydroxide and potassium hydroxide. The phorbol ester content of the kernel may be reduced by up to about 25% w/w, and the resulting endosperm can be processed to further reduce the phorbol ester content in the cake to make it more suitable as animal feed.

In one aspect of the invention there is provided a process to reduce the phorbol ester content of *Jatropha curcas* seed kernel, which kernel comprises an endosperm and a tegmen, by removing the tegmen from the endosperm. Preferably, the process is an industrial scale process.

In a preferred embodiment of the invention the process comprises the steps of:
a) contacting at least one *Jatropha curcas* seed kernel with a chemical solution;
b) separating the tegmen from the endosperm; and
c) collecting the separated endosperm and optionally the tegmen.

Preferably the chemical solution comprises one or more chemicals that act to loosen the tegmen around the endosperm.

In another preferred embodiment, the one or more chemicals are selected from the group comprising, alkalis, including alkali salts such as sodium hydroxide, magnesium hydroxide, potassium hydroxide and calcium hydroxide; acids, salts, such as sodium chloride, sodium carbonate and sodium bicarbonate; and oxidizing agents, such as hydrogen peroxide.

In another preferred embodiment, the one or more chemicals are selected from the group comprising potassium hydroxide, sodium hydroxide, sodium bicarbonate and hydrogen peroxide.

In another preferred embodiment of the process, in a) the contacting includes mixing of the seed kernel with the chemical solution, preferably by rotation or shaking.

In another preferred embodiment the process further comprises a step of rinsing the kernels from step a) prior to step b).

In another preferred embodiment of the process, the contacting in step a) is for a period of at least 1, 5, 10, 15, 20, 25 or 30 minutes.

In another preferred embodiment of the process, step a) is performed at room temperature.

In another preferred embodiment of the process, the chemical solution comprises sodium bicarbonate and/or hydrogen peroxide.

In another preferred embodiment of the process, the chemical solution comprises at least 0.005% sodium bicarbonate and/or at least 0.025% hydrogen peroxide.

In another preferred embodiment there is provided an industrial scale process comprising the steps of:
a) contacting at least one *Jatropha curcas* seed kernel with a chemical solution by continuous mixing for about 10-15 minutes;
b) separating the tegmen from the endosperm by washing with water over a sieve; and
c) collecting the separated endosperm and optionally the tegmen.

In another preferred embodiment of the process, at least 10, 20, 30, 40, 50, 60, 70, 80 or 90% of the tegmen is removed.

In another preferred embodiment of the process, step a) and/or b) is performed in a rotary drum.

In another preferred embodiment of the process, the phorbol ester content of the separated endosperm in step c) is at least 5, 10, 15, 20, 25 or 30% w/w reduced compared to the kernel in step a).

In another preferred embodiment of the process, the separated endosperm from step c) is further processed to extract oil and produce seed cake.

In another preferred embodiment of the process, the separated tegmen from step c) is further processed into phorbol ester-containing products selected from the group comprising anti-microbial, anti-viral, anti-mollusc, anti-tumor and bio-pesticide agents.

Another aspect of the invention provides at least one *Jatropha curcas* seed kernel with reduced phorbol ester content, wherein the tegmen has been removed and the phorbol ester reduction is at least 5, 10, 15, 20, 25 or 30% w/w.

In one part of disclosure, the at least one *Jatropha curcas* seed kernel with reduced phorbol ester content is produced by a process according to any aspect of the invention.

Another aspect of the invention provides a *Jatropha curcas* seed cake with a phorbol ester content reduced by at least 5, at least 10, at least 15, at least 20, at least 25 or by at least 30% w/w, wherein the cake has been produced using at least one seed kernel without its tegmen.

In one part of the disclosure the *Jatropha curcas* seed cake is produced by a process of the invention in which the phorbol ester content of the separated endosperm in step c) is at least 5, 10, 15, 20, 25 or 30% reduced compared to the kernel in step a).

Another part of the disclosure provides at least one isolated *Jatropha curcas* seed tegmen, obtained by the process according to any aspect of the invention.

In a preferred example, the tegmen has further been dried and powdered.

Another part of the disclosure provides at least one isolated *Jatropha curcas* seed tegmen obtained according to any aspect of the invention for use as an anti-microbial, anti-viral, anti-mollusc, anti-tumor or bio-pesticide agent.

Another part of the disclosure provides the use of the at least one *Jatropha curcas* seed kernel with reduced phorbol ester content for the production of oil and seed cake.

A part of the disclosure provides the use of *Jatropha curcas* seed cake with reduced phorbol ester content for the production of animal feed.

Another part of the disclosure provides the use of *Jatropha curcas* seed tegmen with highly concentrated phorbol ester content for the production of an anti-microbial, anti-viral, anti-mollusc, anti-tumor or bio-pesticide agent.

Another part of the disclosure provides *Jatropha curcas* oil, isolated from at least one *Jatropha curcas* seed kernel with tegmen removed and having a phorbol ester content reduced by at least 5, 10, 15, 20, 25 or 30%.

### BRIEF DESCRIPTION OF THE FIGURES

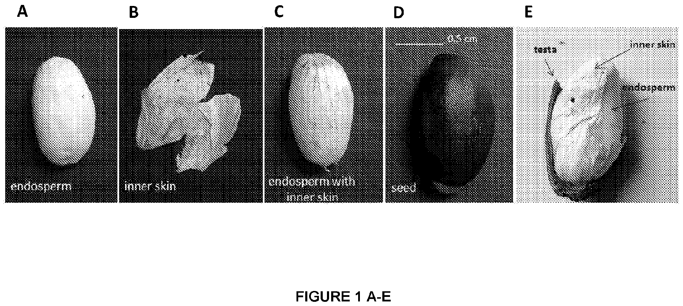

Figure 1A-E shows the gross structure of a *Jatropha* seed. Shown is an endosperm without inner skin (tegmen) (A); an inner skin removed from a kernel (B); a kernel (endosperm with inner skin) (C); an intact *Jatropha* seed (D) and a cut-away view of a seed showing the arrangement of the outer testa, inner skin and endosperm (E).

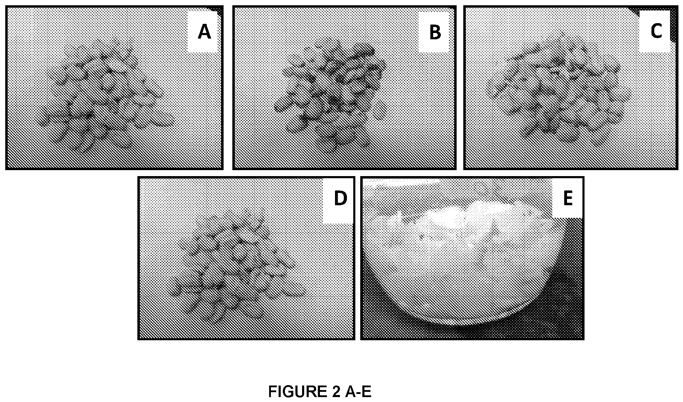

Figure 2A-E shows the visual effects of various chemical treatments on *Jatropha* seed kernels. Kernels were treated for 30 mins with (A) 0.05 N NaOH; (B) 0.2 M KOH; (C) 0.125% NaHCO₃; (D) 5% Hydrogen Peroxide; and (E) Separated inner skins after 30 min treatment of seeds with 5% hydrogen peroxide.

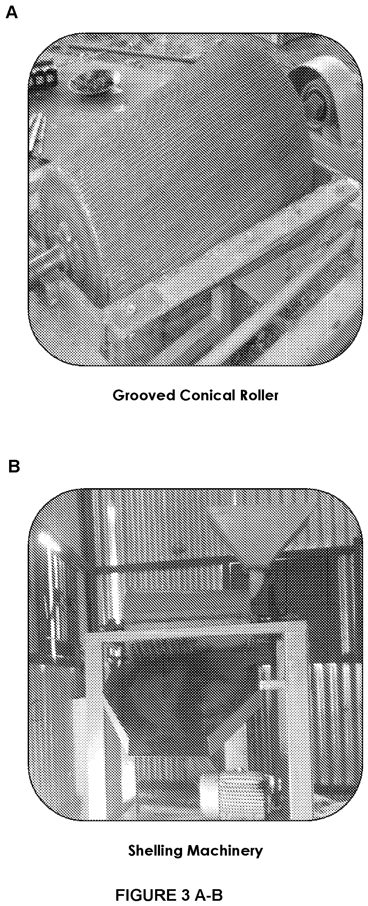

Figure 3A-B shows a machine for shelling *Jatropha* seeds. The machine operates with a grooved conical roller (A), which is enclosed in a casing (B). The bottom part of the casing has sieves, which measure 8.5 mm in width. Soaked seeds are fed through a hopper into the casing, where the seeds are pressed by the grooved roller against the sieved wall of the casing, thereby breaking the outer shell and separating the kernel.

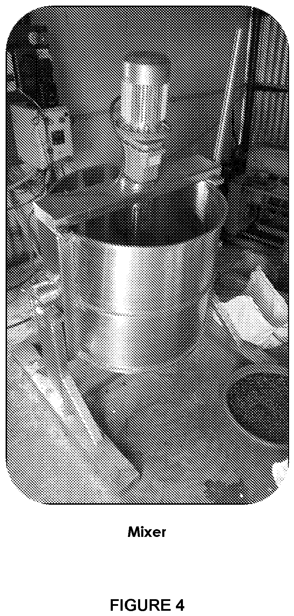

Figure 4 shows a machine for processing *Jatropha* kernels. The machine comprises a stainless drum with a stirrer operated by a 1 HP Motor. The stirrer is fitted with paddles to ensure uniform stirring of kernels and solution to loosen the tegmen and has the capacity to process 200 kg of kernels per hour. The machine has a tilting facility which facilitates easier discharge of the output for further processing.

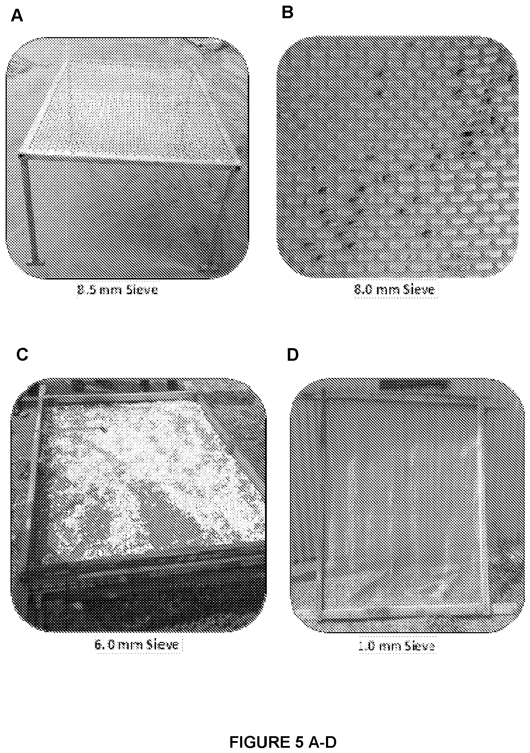

Figure 5A-D shows different types of sieves used in the manufacture process for grading and sorting of seeds, kernels and peeled skins. The 8.5 mm sieve (A) is used to retain seeds that are above 8.5 mm in width for shelling and further processing. The shelling machine output after winnowing is passed through the 8.0 mm sieve (B), which separates the unbroken whole seeds and kernels. The kernels pass through the 8.0 mm sieve whereas the whole unbroken seeds are retained in the sieve. The 6 mm sieve (C) is used during the washing of the treated kernels to retain the whole and half kernels and allow the peeled skins and small broken bits of kernels pass through and be collected in the 1.0 mm fine sieve (D).

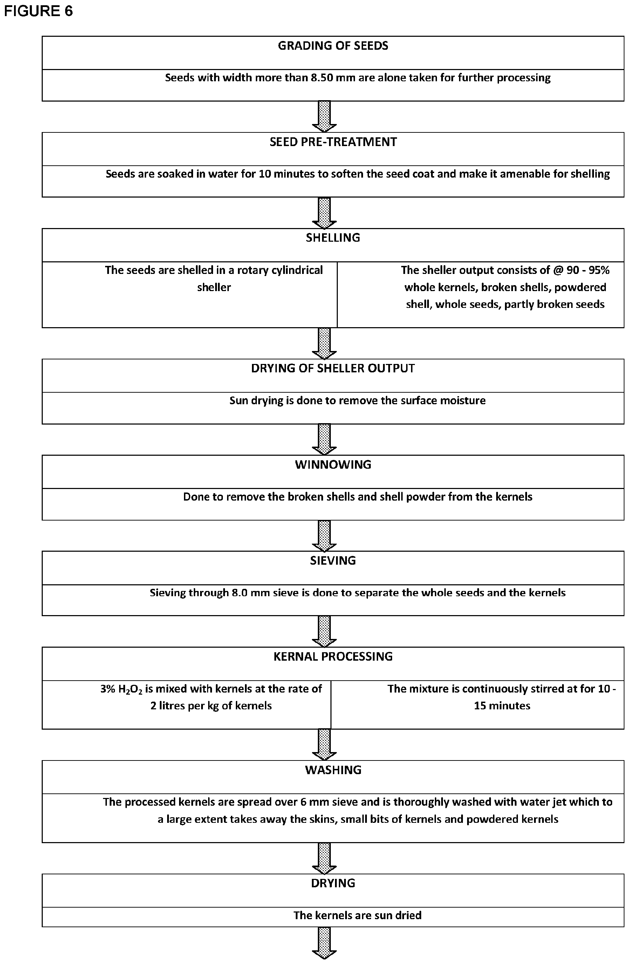

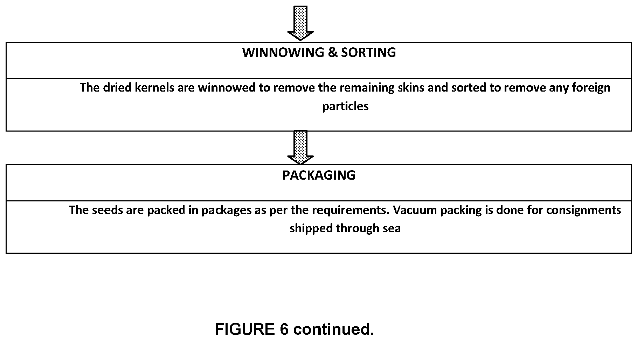

Figure 6 shows a flow chart which includes an industrial scale process according to a one part of the disclosure.

### DETAILED DESCRIPTION OF THE PREFERRED EMBODIMENTS

Bibliographic references mentioned in the present specification are for convenience listed at the end of the examples. The whole content of such bibliographic references is herein incorporated by reference but are not to be assumed to form part of the common general knowledge.

### Definitions

For convenience, certain terms employed in the specification, examples and appended claims are collected here.

The term "chemicals that loosen the tegmen" is herein intended to refer to chemicals that weaken the tight association between tegmen and kernel endosperm such that the tegmen separates or floats away from the endosperm in the composition or may be simply separated from the endosperm by, for example, mechanical means such as in a rotary drum if on an industrial scale. Suitable chemicals may include, for example, potassium hydroxide, sodium hydroxide, sodium bicarbonate and hydrogen peroxide.

The term "comprises/comprising" and grammatical variations thereof when used in this specification are to be taken to specify the presence of stated features, integers, steps or components or groups thereof, but do not preclude the presence or addition of one or more other features, integers, steps, components or groups thereof. Accordingly, the term "comprising" not only encompasses but can be replaced by or used interchangeably with the more restrictive terms "consisting essentially of" and "consisting of."

The terms "inner skin" and "tegmen" are used interchangeably herein to relate to the seed's inner protective layer covering the seed endosperm.

The term "isolated" is herein defined as a biological component (such as; kernel; tegmen; endosperm; cake; oil) that has been substantially separated, produced apart from, or purified away from other biological components in the plant in which the component naturally occurs, i.e., other proteins and/or macromolecular structures.

The term 'kernel' as used herein is the portion of the seed that remains after the outer layer or testa is removed, and comprises the endosperm with covering inner skin (tegmen) layer. For the purpose of the invention whole kernel or pieces or fragments thereof may be chemically treated to remove the tegmen, thereby leaving tegmen-free endosperm that are reduced in PEs compared to kernels. In a preferred embodiment whole kernels are treated according to the method of the invention.

A person skilled in the art will appreciate that the present invention may be practiced without undue experimentation according to the disclosures given herein.

In one aspect of the invention there is provided a process to reduce the phorbol ester content of *Jatropha curcas* seed kernel, which kernel comprises an endosperm and a tegmen, by removing the tegmen from the endosperm.

In a preferred embodiment of the invention the process comprises the steps of:
a) contacting at least one *Jatropha curcas* seed kernel with a chemical solution;
b) separating the tegmen from the endosperm; and
c) collecting the separated endosperm and optionally the tegmen.

In another preferred embodiment of the process of the invention the chemical solution comprises one or more chemicals that act to loosen the tegmen around the endosperm.

In another preferred embodiment of the process of the invention the one or more chemicals are selected from the group comprising, alkalis, including alkali salts such as sodium hydroxide, magnesium hydroxide, potassium hydroxide and calcium hydroxide; acids, salts, such as sodium chloride, sodium carbonate and sodium bicarbonate; and oxidizing agents, such as hydrogen peroxide or other compounds containing an oxygen-oxygen single bond or peroxide anion. It would be understood by a skilled person in the art that it would be apparent from the nature of the chemicals disclosed as suitable in the Examples that the working concentrations may be empirically determined and vary from those disclosed in the Examples and that other similar chemicals may be acceptable for the process of the invention, without departing from the invention.

In another preferred embodiment of the process of the invention the one or more chemicals are selected from the group comprising potassium hydroxide, sodium hydroxide, sodium bicarbonate and hydrogen peroxide. Preferably the chemical solution comprises sodium bicarbonate. More preferably, the chemical solution comprises hydrogen peroxide or a combination of hydrogen peroxide and sodium bicarbonate.

In another preferred embodiment of the process of the invention the chemical solution comprises at least 0.005% sodium bicarbonate. In another preferred embodiment the sodium bicarbonate in the solution is at least 0.025%. In another preferred embodiment the sodium bicarbonate in the solution is at least 0.125%. In another preferred embodiment the sodium bicarbonate in the solution is in the range of about 0.025% to about 0.125%.

Preferably the chemical solution comprises at least 0.025% hydrogen peroxide. In another preferred embodiment the hydrogen peroxide in the solution is at least 1%. In another preferred embodiment the hydrogen peroxide in the solution is at least 5%. In another preferred embodiment the hydrogen peroxide in the solution is in the range of about 1% to about 5%.The amount of chemical required in the solution to loosen the inner skin may be determined for temperature and/or contact time.

In another preferred embodiment of the process of the invention the contacting includes mixing of the seed kernel with the chemical solution, preferably by rotation or shaking. The mixing may be continuous or discontinuous. Preferably the mixing is continuous. The steps of contacting and/or removal of the tegmen from the kernel may be, for example, performed in a rotary drum. The contacting may be performed in a mixer similar to that described in Example 2 and shown in Figure 4.

In another preferred embodiment the process of the invention further comprises a step of rinsing the kernels from step a) prior to step b). Rinsing or washing of the kernels from step a) to essentially remove the chemical solution may be with water or other suitable liquid. The rinsing or washing may be performed on one or more sieves such as those described in Example 2 and shown in Figure 5. The rinsing may preferably be performed with a water jet to assist separation of chemically-loosened tegmen from the kernel; and may be performed on a 6 mm sieve to retain only the whole and half kernels.

In another preferred embodiment of the process of the invention the contacting in step a) is for a period of at least 1, 5, 10, 15, 20, 25 or 30 minutes. It would be understood that the contact time can be empirically determined depending on parameters such as contact temperature, scale of treatment, concentration of chemical solution, strength of the mixing/shaking. Intermediate contact times, between the recited amounts, are intended to fall within the scope of the invention. Preferably step a) is performed at room temperature.

In another preferred embodiment of the process of the invention at least 10, 20, 30, 40, 50, 60, 70, 80 or 90% of the tegmen is removed. Intermediate amounts of tegmen removal, between the recited amounts, are intended to fall within the scope of the invention.

In another preferred embodiment of the process of the invention the phorbol ester content of the separated endosperm in step c) is at least 5, 10, 15, 20, 25 or 30% w/w reduced compared to the kernel in step a). Intermediate values, between the recited amounts, are intended to fall within the scope of the invention.

In another preferred embodiment of the invention the process is an industrial scale process comprising the steps of:
a) contacting at least one *Jatropha curcas* seed kernel with a chemical solution by mixing for about 10-15 minutes;
b) separating the tegmen from the endosperm by washing with water over a sieve; and
c) collecting the separated endosperm and optionally the tegmen.

Preferably the mixing in step a) is performed at a rate of about 2 litres of solution per kg of kernals. Preferably the washing in step b) is performed with a water jet, which assists removal of tegmen, small fragments of kernels and powdered kernels. In step b) the separating may also comprise drying of the washed seeds followed by winnowing to further separate processed kernels from remaining tegmen.

In one part of the disclosure the process comprises the steps of:
a) contacting at least one *Jatropha curcas* seed kernel with a chemical solution, at a rate of 0.5 kg kernels per litre of solution, by mixing for about 10-15 minutes;
b)
   (i) separating the tegmen from the kernels by washing with water over a 6 mm sieve,
   (ii) drying the washed kernels;
   (iii) winnowing the dried kernels to remove remaining tegmen; and
c) collecting the separated endosperm and optionally the tegmen.

In a preferred example the chemical solution comprises 3% H₂O₂.

A more preferred exampleis as shown in Figure 6.

Preferably the separated endosperm from step c) is further processed to extract oil and produce seed cake.

Preferably the separated tegmen from step c) is further processed into phorbol ester-containing products selected from the group comprising anti-microbial, anti-viral, anti-mollusc, anti-tumor and bio-pesticide agents.

Another aspect of the invention provides at least one Jatropha curcas seed kernel with reduced phorbol ester content, wherein the tegmen has been removed to leave only the endosperm wherein the phorbol ester reduction is at least 5, 10, 15, 20, 25 or 30% w/w. Intermediate values, between the recited amounts, are intended within the scope of the invention. The reduced amount is relative to unprocessed seed kernel.

One part of the disclosure provides at least one *Jatropha curcas* seed endosperm produced by the process of the hereinbefore described invention.

Another part of the disclosure provides the use of the at least one *Jatropha curcas* seed kernel with reduced phorbol ester content, i.e. an endosperm, for the production of oil and seed cake. The seed endosperm according to any part of the disclosure may be processed to obtain oil and seed cake. The seed cake may be further processed to remove sufficient remaining phorbol esters to be suitable as animal feed.

A preferred embodiment provides a *Jatropha curcas* seed cake with reduced phorbol ester content, wherein the cake has been produced using at least one seed kernel, in which the tegmen has been removed thereby reducing the phorbol ester content in the cake by at least 5, 10, 15, 20, 25 or 30% w/w. Intermediate values, between the recited amounts, are intended within the scope of the invention.

One part of the disclosure provides *Jatropha curcas* seed cake produced by the process of the invention.

Another part of the disclosure provides the use of *Jatropha curcas* seed cake with reduced phorbol ester content for the production of animal feed.

Another part of the disclosure provides at least one isolated *Jatropha curcas* seed tegmen, obtained by the process of the invention. The tegmen may be in a dried and powdered form.

Another part of the disclosure provides the use of *Jatropha curcas* seed tegmen with highly concentrated phorbol ester content for the production of an anti-microbial, anti-mollusc, anti-tumor or bio-pesticide agent. The tegmen may further be dried and powdered in the production of these agents. The tegmen may be suitable for use in the production of anti-microbial, anti-viral, anti-mollusc, anti-tumor or bio-pesticide agents.

Another part of the disclosure provides *Jatropha curcas* oil, isolated from at least one *Jatropha curcas* seed kernel having reduced phorbol ester content. In a preferred example the tegmen has been removed according to the invention and the phorbol ester reduction in the kernel is at least 5, 10, 15, 20, 25 or 30% w/w.

Having now generally described the invention, the same will be more readily understood through reference to the following examples which are provided by way of illustration, and are not intended to be limiting of the present invention.

A person skilled in the art will appreciate that the present invention may be practised without undue experimentation according to the method given herein.

### EXAMPLES

### Materials and Methods

*Jatropha* fruits were harvested and decorticated. Figure 1 shows the gross structure of a *Jatropha* seed. Shown is an endosperm without inner skin (tegmen) (A); an inner skin removed from a kernel (B); a kernel (endosperm with inner skin) (C); an intact *Jatropha* seed (D) and a cut-away view of a seed showing the arrangement of the outer testa, inner skin and endosperm (E). For Example 1 the seed coat (testa) was removed manually to obtain kernels attached to inner skin.

### EXAMPLE 1

### Small scale production of Jatropha curcas seed kernel

### Treatment of kernels to loosen tegmen

Hydrogen peroxide (1%, 2%, 3%, 4% and 5% by volume), sodium bicarbonate 0.025%, 0.05%, 0.075%, 0.1% and 0.125% by volume), potassium hydroxide (0.025M, 0.05M, 0.1M and 0.2M) and sodium hydroxide of 0.05N solutions were prepared and kept ready. Twenty grams of kernels for each treatment were placed in a one liter glass beaker. 100 ml of various solutions were added to the beaker and the contents shaken at 125 rpm in an orbital shaker for 10, 20 or 30 min at room temperature.

After the incubation period 100 ml of water was added to the mixture and the mixture was gently stirred for 2-3 minutes to allow the seeds to contact each other to assist the inner skins to peel off. The seeds and skins were transferred to a beaker which contained water, rinsed once again, and the seeds and peeled inner skins were separated. Subsequently, the kernels were dried at 65°C in an oven overnight, weighed and the kernels with and without skin were counted to calculate the percentage of the kernels from which the inner skin were removed. The amount of inner skin removed from kernels using varying concentration of chemicals and incubation times is shown in Table 1.

**Table 1. Treatment at Room Temperature with shaking**

| | | | Treatment time | | | | | | | | |
|---|---|---|---|---|---|---|---|---|---|---|---|
| Reagents | Concentration | Starting Weight | 10min. | | | 20min | | | 30min | | |
| | Molar / percent | In grams (gm) | Weight after treat | Seeds with / without skin | % of skin removed | Weight after treat | Seeds with / without skin | % of skin removed | Weight after treat | Seeds with / without skin | % of skin removed |
| | | | | | | | | | | | |
| Potassium hydroxide | 0.025M | 20 | 19.56 | 41/36 | 46.75% | 19.52gm | 38/37 | 49.33% | 19.36 | 40/36 | 47.36% |
| | 0.05M | 20 | 18.95 | 45/31 | 40.78% | 18.79gm | 39/36 | 48.00% | 18.72 | 38/34 | 47.22% |
| | 0.1M | 20 | 18.80 | 38/32 | 45.71% | 18.70gm | 36/37 | 50.68% | 18.70 | 35/41 | 53.94% |
| | 0.2M | 20 | 18.80 | 30/38 | 55.88% | 18.72gm | 30/40 | 57.14% | 18.70 | 32/41 | 56.16% |
| | | | | | | | | | | | |
| Sodium bicarbonate | 0.025% | 20 | 18.95 | 30/41 | 57.74% | 18.90gm | 28/41 | 59.42% | 18.88 | 25/42 | 62.68% |
| | 0.05% | 20 | 18.85 | 28/40 | 58.82% | 18.80gm | 27/40 | 59.70% | 18.70 | 25/44 | 63.76% |
| | 0.1% | 20 | 18.70 | 27/41 | 60.29% | 18.60gm | 22/48 | 68.57% | 18.50 | 20/48 | 70.58% |
| | 0.125% | 20 | 18.73 | 25/48 | 65.75% | 1853gm | 21/51 | 70.83% | 18.48 | 15/54 | 78.26% |
| | | | | | | | | | | | |
| Hydrogen peroxide | 1% | 20 | 18.51 | 16/50 | 76.92% | 18.48gm | 15/55 | 78.57% | 18.42 | 13/52 | 80.00% |
| | 2% | 20 | 18.51 | 15/56 | 78.87% | 18.43gm | 14/53 | 79.01% | 18.36 | 11/50 | 81.96% |
| | 3% | 20 | 18.48 | 14/58 | 80.55% | 18.36gm | 14/54 | 79.41% | 18.30 | 12/52 | 81.25% |
| | 4% | 20 | 18.47 | 14/59 | 80.82% | 18.33gm | 12/55 | 82.08% | 18.25 | 8/55 | 84.30% |
| | 5% | 20 | 18.38 | 10/60 | 85.72% | 18.27gm | 8/59 | 86.76% | 18.24 | 6/60 | 90.90% |
| | | | | | | | | | | | |
| Sodium hydroxide | 0.05N | 20 | 19.10 | 57/13 | 18.57% | 18.95 | 51/18 | 26.08% | 18.85 | 40/30 | 42.85% |

### Phorbol ester analysis

The oven-dried kernels were powdered for PE analysis as follows:
Extracted samples for PE quantitation: 4 g of kernel powder was extracted with 20 ml methanol twice by sonication at 60°C for 1hr and the final volume adjusted to 37.5 ml. 0.4 g of skin powder was extracted with 2 ml methanol twice by sonication at 60°C for 1 hr, and the final volume adjusted to 4 ml. 100 µl of filtered sample was injected into a HPLC system for standard PE analysis according to the method of Bu et al., (Ecotoxicol. Environ. Saf. 84: 268 - 273 (2012)). Five micrograms of PMA5 (phorbol-12-myristate-13-acetate) was used as the reference for PE quantitation.

### Results

The removal of inner skin or tegmen of *Jatropha* kernels was carried out with the aim of keeping the operation low cost and uncomplicated when scaled up to industrial processing of hundreds of tons of kernels at one time. The testa or the seed coats from the decorticated *Jatropha* seeds were removed by breaking the seeds, and the kernels were collected. Twenty grams of the seeds were found to contain an average of 70 to 75 kernels.

These were placed in solutions of various concentrations of the chemicals according to the Materials and Methods section. The treatments were carried out at room temperature keeping in mind an aim of minimizing the costs of operating an industrial scale process. The kernels in various chemical solutions were incubated in a shaker for ten, twenty or thirty minutes (for industrial scale, rotary drums or other suitable devices can be used for this purpose). The treated seeds were processed, the percentage of skin removed was calculated and the phorbol ester content was analyzed as mentioned in Materials and Methods.

Treatment with 0.025 M potassium hydroxide for 10 minutes showed 47% skin removal. This percentage increased to 49% maximum skin removal when treated for 20 minutes. As the concentration was increased stepwise from 0.025 M to 0.2 M the percentage of skin removal was also increased at every time point (Table 1). A maximum of 57% of kernels were devoid of the inner skin when the treatment was at 0.2 M for 20 minutes duration. On the other hand, treatment with 0.05 N sodium hydroxide at different time points showed a lower percentage of skin removal, compared to the potassium hydroxide. When treated for 10 to 30 minutes the percentage skin removal varied from 19% to 43%, respectively (Table 1). However, treatment of kernels with potassium hydroxide reduced kernel quality, with browning of kernels after drying overnight at 65°C compared to the sodium hydroxide treatment which had no effect on kernel quality after drying at 65°C (Figure 2A and 2B).

A similar trend of increasing percentage of skin removal was observed with increasing sodium bicarbonate and hydrogen peroxide concentration and longer incubation time. However, the actual percentage of skin removal varied between the treatments and time points. For example, treatment with 0.025%, 0.05%, 0.1% or 0.125% by volume sodium bicarbonate showed a minimum skin removal percentage of 58% at 0.025% by volume when treated for 10 minutes. However, the largest skin removal percentage of 78% was at 0.125% sodium bicarbonate concentration for 30 minutes. When kernels were treated with 1%, 2%, 3%, 4% or 5% by volume hydrogen peroxide a similar trend of increasing skin removal with increased concentration was observed and, surprisingly, the treatment removed up to 91% of the inner skin from the kernels at 5% concentration for 30 minutes. The minimum percentage of inner skin removal was 77% with 1% hydrogen peroxide for 10 minutes (Table 1). The quality of the dried kernels after skin removal was normal and did not show any color change observed with the potassium hydroxide treatment (Figure 2C and 2D). At the end of the treatment times the inner skin of the kernels that had peeled off floated on the top of the solution (Figure 2E). Of the chemicals tested, hydrogen peroxide was the most efficient at loosening and removing the inner skin of the *Jatropha* kernels, with the sodium bicarbonate treatment being the next best.

The oven-dried kernels (at 65°C) were powdered and the phorbol ester content was analyzed as described in the Materials and Methods. The analysis of the PE content of selected samples per treatment showed a reduction in phorbol ester content of up to about 25% w/w (Table 2). On the other hand, inner skin samples isolated contained very high level of phorbol esters (9,525 ppm, 8,904 ppm and 9,437 ppm respectively).

**Table 2. Average crude fat content and percentage of PE reduction in treated samples**

| **Treatment** | **Ave. Crude fat content (%)** | **Ave. PE content (mg/g of sample)** | **Ave. Reduction in PE (mg/g of sample)** | **Ave.% PE reduction** |
|---|---|---|---|---|
| | | | | |
| Control | 50.1 | 2.55 | 0 | 0 |
| Hydrogen peroxide 3% | 50.2 | 1.91 | 0.64 | 25.1 |
| Potassium hydroxide 0.05% | 48.7 | 2.0 | 0.55 | 21.6 |
| Sodium hydroxide 0.05% | 51.6 | 2.27 | 0.28 | 11 |

Hydrogen peroxide and potassium hydroxide treatment reduced the phorbol ester content by a similar amount. However, treatment of the kernels with potassium hydroxide caused browning effects on the kernels which may lower the quality of the seed cake after processing. A reduction by as much as 25% w/w is a significant removal of PE by introducing an additional processing step, and may be further reduced in the defatted kernel meal by other chemical and physical methods.

### EXAMPLE 2

### Large scale processing of Jatropha curcas seed kernel

The following is an example of machinery and methods to separate the inner skin from the *Jatropha* seed kernel and reduce the phorbol ester content of the seeds.

### Machinery employed

### 1. Jatropha seed sheller

Figure 3A shows a seed shelling machine that operates with a grooved conical roller, which is enclosed in a casing (Figure 3B). The bottom part of the casing has sieves, which measure 8.5 mm in width. Soaked seeds are fed through a hopper into the casing, where the seeds are pressed by the grooved roller against the sieved wall of the casing, thereby breaking the outer shell and separating the kernel. The output which consists of whole kernels, shells and whole seeds is sundried, which makes it amenable for further processing. The gap between the grooved roller and the casing can be adjusted by moving the roller along with the shaft. In addition, the bottom casing can be replaced with casings having different sieve sizes. This enables processing of seeds of different sizes.

### Machinery specifications:

| | |
|---|---|
| Shelling Capacity | 10 kg per hour |
| Shelled Seeds | 90% |
| Whole Kernels | 90 - 95% |
| Shelling Percentage | 45 - 50% |
| Motor | 3 HP |

### 2. Kernel processing machine

Figure 4 shows a kernel processing machine that is made up of a 175 litres capacity stainless drum with a stirrer operated by a 1 HP Motor. The stirrer is fitted with paddles to ensure uniform stirring of kernels and chemical solution as described in Example 1 to loosen the tegmen. The machine has the capacity to process 200 kg of kernels per hour. The machine has a tilting facility which facilitates easier discharge of the output for further processing.

### 3. Sieves

Figure 5A-D shows various types of sieves used in the manufacture process for grading and sorting of seeds, kernels and peeled skins. An 8.5 mm sieve (Figure 5A) is used to grade the seeds prior to processing. Seeds that are above 8.5 mm in width are retained in the sieve and used for shelling and further processing. The shelling machine output after winnowing is passed through an 8.0 mm sieve (Figure 5B), which separates the unbroken whole seeds and kernels. The kernels pass through the 8.0 mm sieve whereas the whole unbroken seeds are retained in the sieve. A 6 mm sieve (Figure 5C) is used during the washing process. The treated kernels are spread over the sieve and washed with a water jet. Only the whole and half kernels are retained in the sieve, whereas the peeled skins and small broken pieces of kernels pass through the sieve which gets collected in a 1.0 mm fine sieve (Figure 5D).

### Process steps

A large scale processing scheme according to the disclosure is shown in Figure 6. *Jatropha* seeds are graded using sieves (Figure 5A-D) such that only those with a width of at least 8.5 mm are selected for further processing. The selected seeds are soaked in water for 10 minutes to soften the seed coat and make it amenable for shelling. The seeds may be shelled in a rotary cylindrical sheller such that shown in Figure 3. The sheller output comprises about 90 - 95% whole kernels, broken shells, powdered shell, whole seeds and partly broken seeds. The product from the sheller is dried to remove surface moisture and then winnowed to remove the shells. Sunshine or other sources of heat, such as an oven, may be utilized for the drying step. For example, the product may be dried under bright sunshine for about 3-4 hours; whereas under moderate sunshine the drying step may require about 6-7 hours.

After the shells are removed the seeds are sieved through an 8 mm sieve to separate the whole seeds and the kernels. Kernels are then processed by mixing them with 3% H₂O₂ in a mixer such as that shown in Figure 4, at a rate of 2 litres per kg of kernels and stirred continuously for about 10-15 minutes. Longer mixing times are generally not required because the reaction is normally completed within 10-15 minutes but, nevertheless, the reaction and peeling of tegmen may be monitored visually as floating inner skins. Alternatively, or in addition, samples may be taken and visualized on a petri dish.

After the shells have been stirred in H₂O₂ they are placed on a 6 mm sieve and washed thoroughly with water. Use of a water jet advantageously clears away the skins, small fragments of kernels and powdered kernels. The kernels are then dried, conveniently sundried as described above or by other means.

The dried kernels are winnowed to remove any remaining skins and sorted to remove any foreign particles.

The processed seeds can then be packed for shipping according to requirements.

*Jatropha curcas,* a bio-diesel feedstock plant has gained importance over the past decade as its seeds can be crushed to obtain oil which can be used as fuel either directly or as a bio-diesel blend after trans-esterification. The cake obtained after oil extraction from kernels of *Jatropha* seeds is considered to be of high potential nutritional value in terms of protein and fiber and could be used as an animal feed. However, the presence of PEs makes the seed cake unusable for animal feed as they are considered a co-carcinogen and also have other detrimental health effects (NIH Phorbol esters, safety data sheet, National Institute of Health (2007)). PEs are enriched in the inner skin or tegmen (6-10 times the concentration of the whole kernel; as high as 14,449 ppm or 1.4% dry weight) as well as in the endosperm of the kernel. It is difficult to peel the tightly bound inner skin or tegmen from the kernels of *Jatropha,* thereby creating processing problems if wanting to reduce the PE content of the seed cake. Manual or mechanical force peeling is not possible to any great extent especially in the context of handling industrial scale quantities of seeds (tens of tonnes) daily.

It was imperative to find an alternative method to loosen and remove the tightly bound inner skin of the *Jatropha* kernel that is feasible commercially in cost, time and efficiency to suit the industrial scale needs. It is also highly important to select a chemical that will be used in removal of the inner skin that will not modify the nutritional quality of the seed cake or the quality and quantity of the oil produced. These parameters were considered and chemicals such as sodium bicarbonate, potassium hydroxide, sodium hydroxide and hydrogen peroxide were selected that were relatively inexpensive and/or commonly used in the food industry.

Though the cost is cheaper and around 50% of the inner skin was removed from the kernels after treatment with potassium hydroxide and sodium hydroxide, the quality of the seeds might be compromised, particularly with potassium hydroxide (Figure 1B). The sodium hydroxide treatments may not be an optimal method to remove the inner skin of *Jatropha,* although a combination with another chemical such as hydrogen peroxide may improve performance and lessen the potential negative effects of the hydroxide.

On the other hand, hydrogen peroxide treatment and the sodium bicarbonate treatment worked most effectively in removing the inner skin of *Jatropha* kernels, with removal percentage varying from 77 to 91% and 58 to 78% for the varying concentrations of hydrogen peroxide and sodium bicarbonate, respectively. As soon as the treatment was over, the skins floated on the surface and could be easily removed without rubbing or force. Between sodium bicarbonate and hydrogen peroxide, sodium bicarbonate is the more cost-effective although it did not perform as well. Lower concentrations of hydrogen peroxide should be further tested with longer incubation times, or in combination with the sodium bicarbonate to make it more cost-effective.

The increased removal of the inner skin was reflected in the reduction of PE content, whereby treatment with hydrogen peroxide and potassium hydroxide showed higher reduction (up to 25% w/w reduction) of the PEs. However, in light of the browning effects of the potassium hydroxide treatment and the potential effect on nutritional value of the seed cake, the hydrogen peroxide treatment was found to be the most effective of those tested for the industrial processing of seed cake to remove PE. This treatment along with other physical or chemical methods can be used in combination to reduce the PE content of the defatted meal to safer levels for use as animal feed.

The inner skins which are removed can be dried and powdered to use directly as a bio-pesticide to control pests or the PEs can be isolated to be used as bio-pesticides. Phorbol esters are not only bio-pesticidal, they have also been shown to have anti-microbial, anti-viral, anti-molluscidal and anti-tumor properties (Antal Corina E., et al., Cell 160 (3):489-502, doi:10.1016/j.cell.2015.01.001; El-Mekkawy S., et al., Phytochemistry 53 (4): 457-464 (2000); Goel G., et al., International Journal of Toxicology 26 (4): 279-288 (2007); Zhong Y., et al., Antivir Chem Chemother 16 (5): 303-313 (2005)). Thus the inner skin of *Jatropha* can be processed and sold into the Agri-industry to generate additional revenue.

### References

Antal Corina E, Hudson Andrew M, Kang E, Zanca C, Wirth C, Stephenson Natalie L, Trotter Eleanor W, Gallegos Lisa L, Miller Crispin J, Furnari Frank B, Hunter T, Brognard J, Newton Alexandra C, Cancer-Associated Protein Kinase C Mutations Reveal Kinase's Role as Tumor Suppressor. Cell 160 (3): 489-502. doi:10.1016/j.cell.2015.01.001.
Bu, Y.P., B.T. Ha, et al., "Light induced degradation of phorbol esters" Ecotoxicol. Environ. Saf. 84: 268 - 273 (2012).
El-Mekkawy S., Meselhy MR, Nakamura N, Hattori M, Kawahata T, Otake T, Anti-HIV-1 phorbol esters from the seeds of Croton tiglium. Phytochemistry 53 (4): 457-464 (2000).
He, W., A.J. King, et al., "Analysis of seed phorbol-ester and curcin content together with genetic diversity in multiple provenances of Jatropha curcas L. from Madagascar and Mexico". Plant Physiol. Biochem. 49 (10): 1183-1190 (2011).
Goel G., H.P.S. Makkar, et al., "Phorbol Esters: Structure, Biological Activity, and Toxicity in Animals". International Journal of Toxicology, 26 (4): 279-288 (2007).
NIH (2007) Phorbol esters, safety data sheet. National Institute of Health.
Zhong Y., Matsuya Y, Nemoto H, Mori M, Saito H, Yamamoto N., Novel phorbol esters exert dichotomous effects on inhibition of HIV-1 infection and activation of latent HIV-1 expression. Antivir Chem Chemother 16 (5): 303-313 (2005).

## Claims

1. A process to reduce the phorbol ester content of seed kernel of Jatropha curcas varieties containing phorbol ester, where kernel comprises an endosperm and a tegmen, by removing the tegmen from the endosperm, comprising the steps of: a) contacting at least one Jatropha curcas seed kernel with a chemical solution, wherein the chemical solution comprises one or more chemicals that act to loosen the tegmen around the endosperm; b) separating the tegmen from the endosperm; and c) collecting the separated endosperm and optionally the tegmen.

2. The process of claim 1, wherein the one or more chemicals are selected from the group comprising, alkalis, including alkali salts such as sodium hydroxide, magnesium hydroxide, potassium hydroxide and calcium hydroxide; acids, salts, such as sodium chloride, sodium carbonate and sodium bicarbonate; and oxidizing agents, such as hydrogen peroxide.

3. The process of claim 2, wherein the one or more chemicals are selected from the group comprising potassium hydroxide, sodium hydroxide, sodium bicarbonate and hydrogen peroxide.

4. The process of any one of claims 1 to 3, wherein the contacting includes mixing of the seed kernel with the chemical solution, preferably by rotation or shaking.

5. The process of any one of claims 1 to 4, further comprising a step of rinsing the kernels from step a) prior to step b).

6. The process of any one of claims 1 to 5, wherein the contacting in step a) is for a period of at least 1, 5, 10, 15, 20, 25 or 30 minutes.

7. The process of any one of claims 1 to 6, wherein step a) is performed at room temperature.

8. The process of any one of claims 1 to 7, wherein the chemical solution comprises at least 0.005% sodium bicarbonate and/or at least 0.025% hydrogen peroxide.

9. The process of any one of the previous claims, being an industrial scale process comprising the steps of: a) contacting at least one Jatropha curcas seed kernel with a chemical solution by mixing for about 10-15 minutes; b) separating the tegmen from the endosperm by washing with water over a sieve, wherein step a) and/or b) is performed in a rotary drum, and c) collecting the separated endosperm and optionally the tegmen.

10. The process of any one of the previous claims, wherein at least 10, 20, 30, 40, 50, 60, 70, 80 or 90% of the tegmen is removed.

11. The process of any one of claims 1 to 10, wherein the phorbol ester content of the separated endosperm in step c) is at least 5, 10, 15, 20, 25 or 30% reduced compared to the kernel in step a).

12. The process of any one of claims 1 to 11, wherein the separated endosperm from step c) is further processed to extract oil and produce seed cake.

13. The process of any one of claims 1 to 12, wherein the separated tegmen from step c) is further processed into phorbol ester-containing products selected from the group comprising anti-microbial, anti-viral, anti-mollusc, anti-tumor and bio-pesticide agents.

14. At least one Jatropha curcas seed endosperm with reduced phorbol ester content compared to the seed's kernel, wherein the tegmen has been removed from the kernel and the phorbol ester reduction is at least 5, 10, 15, 20, 25 or 30% w/w.

15. Jatropha curcas seed cake produced using seed endosperm, wherein the tegmen has been removed from the kernel and wherein the seed cake has a phorbol ester content reduced by at least 5, at least 10, at least 15, at least 20, at least 25 or by at least 30% w/w compared to a seed cake made with the seed's kernel.

## Patentansprüche

1. Verfahren zum Reduzieren des Phorbolester-Gehaltes eines Samenkorns von Phorbolester enthaltenden Jatropha curcas-Arten, wobei ein Kern ein Endosperm und ein Tegmen umfasst, durch Entfernen des Tegmens vom Endosperm, folgende Schritte umfassend: a) Inkontaktbringen von mindestens einem Jatropha curcas-Samenkorn mit einer chemischen Lösung, wobei die chemische Lösung eine oder mehrere Chemikalien umfasst, welche dazu dienen, das Tegmen rund um das Endosperm zu lockern; b) Trennen des Tegmens von dem Endosperm; und c) Sammeln des getrennten Endosperms und optionsweise des Tegmens.

2. Verfahren nach Anspruch 1, wobei die eine oder die mehreren Chemikalien aus der Gruppe ausgewählt sind, umfassend Alkalien, darin eingeschlossen alkalische Salze wie beispielsweise Natriumhydroxid, Magnesiumhydroxid, Kaliumhydroxid und Calciumhydroxid; Säuren, Salze wie beispielsweise Natriumchlorid, Natriumcarbonat und Natriumbicarbonat; und Oxidationsmittel wie beispielsweise Wasserstoffperoxid.

3. Verfahren nach Anspruch 2, wobei die eine oder die mehreren Chemikalien aus der Gruppe ausgewählt sind, bestehend aus Kaliumhydroxid, Natriumhydroxid, Natriumbicarbonat und Wasserstoffperoxid.

4. Verfahren nach einem der Ansprüche 1 bis 3, wobei das Inkontaktbringen Mischen des Samenkorns mit der chemischen Lösung einschließt, vorzugsweise durch Drehen oder Schütteln.

5. Verfahren nach einem der Ansprüche 1 bis 4, ferner umfassend einen Schritt des Spülens der Kerne von Schritt a) vor Schritt b).

6. Verfahren nach einem der Ansprüche 1 bis 5, wobei das Inkontaktbringen in Schritt a) über einen Zeitraum von mindestens 1, 5, 10, 15, 20, 25 oder 30 Minuten erfolgt.

7. Verfahren nach einem der Ansprüche 1 bis 6, wobei Schritt a) bei Raumtemperatur durchgeführt wird.

8. Verfahren nach einem der Ansprüche 1 bis 7, wobei die chemische Lösung mindestens 0,005 % Natriumbicarbonat und/oder mindestens 0,025 % Wasserstoffperoxid umfasst.

9. Verfahren nach einem der vorhergehenden Ansprüche, welches ein Verfahren industrieller Größenordnung ist, folgende Schritte umfassend: a) Inkontaktbringen von mindestens einem Jatropha curcas-Samenkorn mit einer chemischen Lösung durch Mischen über ungefähr 10 bis 15 Minuten; b) Trennen des Tegmens von dem Endosperm durch Waschen mit Wasser über einem Sieb, wobei Schritt a) und/oder b) in einer Drehtonne durchgeführt wird, und c) Sammeln des getrennten Endosperms und optionsweise des Tegmens.

10. Verfahren nach einem der vorhergehenden Ansprüche, wobei mindestens 10, 20, 30, 40, 50, 60, 70, 80 oder 90 % des Tegmens entfernt werden.

11. Verfahren nach einem der Ansprüche 1 bis 10, wobei der Phorbolestergehalt des in Schritt c) getrennten Endosperms um mindestens 5, 10, 15, 20, 25 oder 30 % im Vergleich zu dem Kern in Schritt a) reduziert ist.

12. Verfahren nach einem der Ansprüche 1 bis 11, wobei das getrennte Endosperm von Schritt c) weiter verarbeitet wird, um Öl zu extrahieren und Samenkuchen zu erzeugen.

13. Verfahren nach einem der Ansprüche 1 bis 12, wobei das getrennte Tegmen von Schritt c) weiter zu phorbolesterhaltigen Produkten verarbeitet wird, ausgewählt aus der Gruppe, welche antimikrobielle, antivirale, Anti-Weichtier-, Anti-Tumor- und Bio-Pestizid-Mittel, umfasst.

14. Mindestens ein Jatropha curcas-Samen-Endosperm mit reduziertem Phorbolestergehalt im Vergleich zu dem Kern des Samens, wobei das Tegmen von dem Kern entfernt wurde und die Phorbolesterreduktion mindestens 5, 10, 15, 20, 25 oder 30 Gewichtsprozent beträgt.

15. Jatropha curcas-Samenkuchen, welcher unter Verwendung von Samen-Endosperm erzeugt wird, wobei das Tegmen von dem Kern entfernt wurde und wobei der Samenkuchen einen Phorbolestergehalt aufweist, welcher um mindestens 5, um mindestens 10, um mindestens 15, um mindestens 20, um mindestens 25 oder um mindestens 30 Gewichtsprozent im Vergleich zu einem mit dem Kern des Samens hergestellten Samenkuchen reduziert ist.

## Revendications

1. Procédé pour réduire la teneur en ester de phorbol d'une graine de variétés de Jatropha curcas contenant de l'ester de phorbol, dans lequel le noyau comprend un endosperme et un tégument, en enlevant le tégument de l'endosperme, comprenant les étapes de : a) mise en contact d'au moins une graine de Jatropha curcas avec une solution chimique, dans lequel la solution chimique comprend un ou plusieurs produits chimiques qui agissent pour décoller le tégument autour de l'endosperme ; b) séparation du tégument de l'endosperme ; et c) collecte de l'endosperme séparé et en option, du tégument.

2. Procédé selon la revendication 1, dans lequel les un ou plusieurs produits chimiques sont sélectionnés parmi le groupe comprenant les alcalis, incluant les sels alcalins tels que l'hydroxyde de sodium, l'hydroxyde de magnésium, l'hydroxyde de potassium et l'hydroxyde de calcium ; les acides, les sels tels que le chlorure de sodium, le carbonate de sodium et le bicarbonate de sodium ; et les agents oxydants tels que le peroxyde d'hydrogène.

3. Procédé selon la revendication 2, dans lequel les un ou plusieurs produits chimiques sont sélectionnés parmi le groupe comprenant l'hydroxyde de potassium, l'hydroxyde de sodium, le bicarbonate de sodium et le peroxyde d'hydrogène.

4. Procédé selon l'une quelconque des revendications 1 à 3, dans lequel la mise en contact inclut le mélange de la graine avec la solution chimique, de préférence par rotation ou secouage.

5. Procédé selon l'une quelconque des revendications 1 à 4, comprenant en outre une étape de rinçage des noyaux issus de l'étape a) avant l'étape b).

6. Procédé selon l'une quelconque des revendications 1 à 5, dans lequel la mise en contact de l'étape a) est réalisée pendant une période d'au moins 1, 5, 10, 15, 20, 25 ou 30 minutes.

7. Procédé selon l'une quelconque des revendications 1 à 6, dans lequel l'étape a) est réalisée à température ambiante.

8. Procédé selon l'une quelconque des revendications 1 à 7, dans lequel la solution chimique comprend au moins 0,005 % de bicarbonate de sodium et/ou au moins 0,025 % de peroxyde d'hydrogène.

9. Procédé selon l'une quelconque des revendications précédentes, lequel est un procédé à échelle industrielle qui comprend les étapes de : a) mise en contact d'au moins une graine de Jatropha curcas avec une solution chimique par mélange pendant environ 10 à 15 minutes ; b) séparation du tégument de l'endosperme par lavage à l'eau au-dessus d'un tamis, dans lequel l'étape a) et/ou b) est réalisée dans un tambour tournant ; et c) collecte de l'endosperme séparé et en option, du tégument.

10. Procédé selon l'une quelconque des revendications précédentes, dans lequel moins 10, 20, 30, 40, 50, 60, 70, 80 ou 90 % du tégument sont enlevées.

11. Procédé selon l'une quelconque des revendications 1 à 10, dans lequel la teneur en ester de phorbol de l'endosperme séparé au niveau de l'étape c) est réduite d'au moins 5, 10, 15, 20, 25 ou 30 % par comparaison avec le noyau de l'étape a).

12. Procédé selon l'une quelconque des revendications 1 à 11, dans lequel l'endosperme séparé issu de l'étape c) est en outre traité pour extraire l'huile et pour produire un tourteau de graines.

13. Procédé selon l'une quelconque des revendications 1 à 12, dans lequel le tégument séparé issu de l'étape c) est en outre traité dans des produits contenant de l'ester de phorbol qui sont sélectionnés parmi le groupe comprenant les agents antimicrobiens, antiviraux, molluscicides, anti-tumoraux et bio-pesticides.

14. Au moins un endosperme de graine de Jatropha curcas présentant une teneur en ester de phorbol réduite par comparaison avec le noyau delà graine, dans lequel le tégument a été enlevé du noyau et la réduction en termes d'ester de phorbol est d'au moins 5, 10, 15, 20, 25 ou 30 % en termes de poids.

15. Tourteau de graines de Jatropha curcas produit en utilisant de l'endosperme de graines, dans lequel le tégument a été enlevé du noyau et dans lequel le tourteau de graines présente une teneur en ester de phorbol réduite d'au moins 5, d'au moins 10, d'au moins 15, d'au moins 20, d'au moins 25 ou d'au moins 30 % en termes de poids par comparaison avec un tourteau de graines constitué à partir du noyau de la graine.
